# EUROPÄISCHE PATENTSCHRIFT

(11) **EP 2 748 039 B1**
(45) Veröffentlichungstag und Bekanntmachung des Hinweises auf die Patenterteilung: **04.03.2015**
(21) Anmeldenummer: 12746281.0
(22) Anmeldetag: 04.08.2012
(51) Int. Cl.: B60R 25/24, B60R 25/20

(54) **VERFAHREN ZUM STEUERN EINER KLAPPE EINES FAHRZEUGS UND ZUGEHÖRIGES FAHRZEUG**
METHOD FOR CONTROLLING A VEHICLE BOOT LID OF A VEHICLE AND ASSOCIATED VEHICLE
PROCÉDÉ DE COMMANDE D'UN HAYON D'UN VÉHICULE ET VÉHICULE ASSOCIÉ

(30) Priorität: 25.08.2011 DE 102011111600
(43) Veröffentlichungstag der Anmeldung: 02.07.2014
(73) Patentinhaber: Audi AG, 85045 Ingolstadt (DE)
(72) Erfinder: GÜNTER, Christian, 85055 Ingolstadt (DE)
(74) Vertreter: Thielmann, Frank
(86) Internationale Anmeldenummer: PCT/EP2012/003343
(87) Internationale Veröffentlichungsnummer: WO 2013/026529

(56) Entgegenhaltungen:
- EP-A2- 1 571 601
- DE-A1- 10 341 691
- DE-A1-102006 037 237
- DE-A1-102009 030 274
- JP-A- 2005 315 024
- JP-A- 2010 236 184
- US-A1- 2007 018 813
- US-A1- 2007 045 019

## Beschreibung

Die Erfindung betrifft ein Verfahren zum Steuern einer Klappe eines Fahrzeugs sowie ein Kraftfahrzeug mit einer Klappe.

Fahrzeuge mit einer Klappe (Heckklappe oder Kofferraumdeckel) können entweder manuell durch Betätigen eines Schalters in oder am Fahrzeug oder durch Betätigen eines Funkschlüssels geöffnet werden.

Es sind auch Fahrzeuge bekannt, bei denen die Öffnung der Klappe nach einer Authentifizierung eines berechtigten Benutzers automatisch erfolgt.

Aus der JP 2005-315 024 ist ein Verfahren sowie ein Kraftfahrzeug nach dem Oberbegriff der Ansprüche 1 und 7 bekannt.

Aus der DE 198 18 263 A1 ist eine Zugangskontrolleinrichtung für Fahrzeuge bekannt, bei der ein Benutzer einen transportablen Identifikationsgeber mit sich trägt, der mit einer im Kraftfahrzeug angeordneten Sende-Empfangseinheit kommuniziert. Mittels einer Sensorik erfolgt eine Erkennung des Benutzers, vorzugsweise mittels eines Bewegungssensors. Nach einer Auswertung erfolgt gegebenenfalls eine Entriegelung, wodurch ein Zugang zum Kraftfahrzeug ermöglicht wird.

In der EP 1 571 601 A2 wird vorgeschlagen, dem Fahrer einen Informationsträger zur Verfügung zu stellen, um im Anschluss an eine Authentifizierung bestimmte Fahrzeugfunktionen zu erlauben.

Die DE 103 41 691 A1 betrifft einen tragbaren elektronischen Schlüssel eines Kraftfahrzeug-Schließsystems. Der tragbare elektronische Schlüssel umfasst eine Bilderfassungseinrichtung zur Erfassung biometrischer Merkmale des Benutzers, insbesondere zur Erfassung charakteristischer Gesichtszüge des Benutzers, um anhand der erfassten Daten einen Vergleich mit gespeicherten Daten vorzunehmen, sodass bei Übereinstimmung das Kraftfahrzeug-Schließsystem entsperrt werden kann.

Die EP 0 994 444 A2 betrifft ein Verfahren zur Betriebsfreigabe eines Kraftfahrzeugs sowie eine Chipkarte und eine zugehörige Fahrzeugeinrichtung. Um einen Zugang zu bestimmten Funktionen eines Kraftfahrzeugs zu erhalten, beispielsweise zum Einschalten der Zündung, benötigt der Benutzer die Chipkarte, die in eine Leseeinrichtung eingesetzt wird. Zusätzlich werden persönliche, biometrische Daten erfasst, beispielsweise Stimmsignale oder Bildmuster des Gesichts des Benutzers um eine unberechtigte Nutzung des Kraftfahrzeugs zu verhindern, selbst wenn der unberechtigte Benutzer die richtige Chipkarte besitzt.

Die DE 10 2005 042 402 A1 beschreibt ein Fahrzeug mit automatisch öffnender Klappe, bei dem ein "Komfortzugang" realisiert ist, indem einem Fahrer der Zugang zum Fahrzeug ermöglicht wird, ohne dass er einen Fahrzeugschlüssel oder eine Fernbedienung benötigt. Stattdessen genügt es, wenn der Fahrer eine Fernbedienung bzw. einen Funkschlüssel als Authentifizierungsmittel mit sich führt, woraufhin ein automatischer Öffnungsvorgang der motorisch angetriebenen Fahrzeugklappe eingeleitet wird. Allerdings wird ein Öffnungsvorgang auch dann eingeleitet, wenn ein unberechtigter Benutzer sich das Authentifizierungsmittel angeeignet hat.

Um diesen Nachteil zu vermeiden, wird in der DE 10 2006 037 237 A1 vorgeschlagen, dass neben einer Authentifizierung des Benutzers durch einen Identifikationsgeber zusätzlich ein Bewegungsmuster bzw. ein Bewegungsablauf erfasst wird. Dazu führt der Benutzer mit dem mobilen Identifikationsgeber ein festgelegtes Bewegungsmuster aus, das beispielsweise zwei Bewegungsrichtungen umfassen kann. Das Durchführen der erforderlichen Bewegungen kann jedoch schwierig sein, beispielsweise wenn der Benutzer Gegenstände trägt.

Als weitere Verbesserung ist in der DE 10 2009 040 395 A1 vorgeschlagen worden, neben einer Authentifizierung des Benutzers anhand eines mobilen Identifikationsgebers ein vorbestimmtes Bewegungsmuster "eines weiteren Objekts" zu erfassen. Dadurch ergibt sich der Vorteil, dass der Benutzer den mobilen Identifikationsgeber nicht in die Hand nehmen muss, um ein bestimmtes Bewegungsmuster durchzuführen, stattdessen kann das Bewegungsmuster z. B. durch eine Beinbewegung des Benutzers erzeugt werden. Allerdings ist eine derartige Steuerung für den Benutzer nicht besonders komfortabel, z. B. wenn er mit Gepäck bepackt Bewegungen auf einem Bein durchzuführen hat.

Der Erfindung liegt daher die Aufgabe zugrunde, ein Verfahren zum Steuern einer Klappe eines Fahrzeugs anzugeben, das für den Benutzer komfortabel ist und gleichzeitig ein zuverlässiges Öffnen der Klappe ermöglicht.

Zur Lösung dieser Aufgabe ist erfindungsgemäß ein Verfahren gemäß Anspruch 1 sowie ein Kraftfahrzeug gemäß Anspruch 7 vorgesehen.

Das erfindungsgemäße Verfahren weist den Vorteil auf, dass ein Öffnen der Klappe nur dann erfolgt, wenn zuvor ein Benutzer identifiziert wurde und wenn eine Auswertung einer Bildaufnahme ergeben hat, dass ein Öffnen der Klappe vom Benutzer gewünscht und damit erforderlich ist. Dieses Verfahren zum Öffnen der Klappe ist für den Benutzer besonders komfortabel, da er weder eine Taste an einem Funkschlüssel noch einen Schalter am oder im Fahrzeug betätigen muss. Darüber hinaus entfällt die Durchführung eines festgelegten Bewegungsmusters, das mit Gepäck schwierig durchzuführen ist. Stattdessen sieht das erfindungsgemäße Verfahren vor, dass nach einer Identifizierung des Benutzers in einem zweiten Schritt eine Bildaufnahme erstellt wird, die anschließend analysiert wird, um zu entscheiden, ob ein Öffnen der Klappe erforderlich bzw. gewünscht wird. Sofern festgestellt wird, dass ein Öffnen gewünscht wird, wird die Klappe motorisch geöffnet.

Es liegt auch im Rahmen des erfindungsgemäßen Verfahrens, dass das Identifizieren des Benutzers anhand eines mitgeführten Funkschlüssels erfolgt. Dabei handelt es sich nicht um einen mechanischen Schlüssel im herkömmlichen Sinne, stattdessen wird ein Transponder benutzt, der in der Lage ist, eine bidirektionale Kommunikation mit einem entsprechenden Funkmodul des Fahrzeugs durchzuführen, wodurch eine Identifizierung stattfinden kann.

Das erfindungsgemäße Verfahren kann besonders einfach durchgeführt werden, wenn die Bildaufnahme mit einer Rückfahrkamera aufgenommen wird. Eine derartige Rückfahrkamera ist bei modernen Fahrzeugen häufig bereits vorhanden, so dass das erfindungsgemäße Verfahren lediglich geringe zusätzliche Kosten verursacht. Zudem ist die Rückfahrkamera zumeist unauffällig eingebaut, so dass das optische Erscheinungsbild des Fahrzeugs nicht beeinträchtigt wird.

Erfindungsgemäß sieht das Verfahren vor, dass bei der Auswertung der Bildaufnahme ermittelt wird, ob der Benutzer Gepäck trägt und/oder einen Einkaufswagen mit sich führt. Die erstellte Bildaufnahme des Benutzers wird einer Bildauswertung unterzogen, bei der geprüft wird, ob die Bildaufnahme bestimmte Muster bzw. Gegenstände enthält. Beispiele dafür sind ein Einkaufswagen, der anhand des Umrisses oder anhand von charakteristischen Linien oder Kanten erfasst werden kann, darüber hinaus können im Rahmen der Bildauswertung typische mitgeführte Gegenstände wie Taschen, Einkaufstüten oder Pakete extrahiert und erkannt werden. Zusätzlich können im Rahmen der Bildauswertung Gegenstände wie ein Koffer, ein Rucksack usw. erfasst und identifiziert werden. Wenn erkannt worden ist, dass der Benutzer einen der aufgezählten typischen Gegenstände mit sich führt, erfolgt ein automatisches Öffnen der Klappe. Dieses Öffnungsverfahren ist für den Benutzer besonders komfortabel, da er lediglich das funkfähige Identifikationsmerkmal mit sich führen muss, das Betätigen eines Schalters oder Tasters oder das Durchführen eines festgelegten Bewegungsmusters entfällt jedoch.

Eine Weiterbildung des erfindungsgemäßen Verfahrens sieht vor, dass nach der Identifizierung eines Benutzers ein optisches Signal ausgegeben wird, insbesondere mittels einer Leuchte, vorzugsweise mittels einer LED (Leuchtdiode). Dadurch ergibt sich der Vorteil, dass der Benutzer erkennen kann, ob eine Identifizierung erfolgreich abgeschlossen worden ist. Wenn der Benutzer das optische Signal sieht, kann er davon ausgehen, dass die Klappe des Fahrzeugs in Kürze automatisch geöffnet wird.

Erfindungsgemäße sieht das Verfahren vor, dass der Benutzer nach der Identifizierung eine zustimmende oder eine ablehnende Bewegung durchführt, die mittels einer Bildaufnahme erfasst wird, wobei die Klappe bei einer zustimmenden Bewegung geöffnet und bei einer ablehnenden Bewegung nicht geöffnet wird. Dadurch wird ein unbeabsichtigtes Öffnen der Klappe in solchen Fällen vermieden, in denen es vom Benutzer nicht gewünscht wird. Denkbar ist dabei, dass der Benutzer ein Gepäckstück oder einen anderen Gegenstand nicht über die Hecköffnung bzw. den Kofferraum einladen will, stattdessen soll das Einladen durch eine Fahrzeugtür erfolgen. Um in diesen Fällen ein unbeabsichtigtes Öffnen zu vermeiden, ist das Verfahren zweistufig ausgestaltet, indem zunächst eine Identifizierung des Benutzers durchgeführt wird, wobei eine erfolgreiche Identifizierung vorzugsweise durch ein optisches Signal angezeigt wird. Anschließend kann der Benutzer in einem zweiten Verfahrensschritt ein Bewegungsmuster ausführen, so dass mittels der Kamera eine Bildaufnahme erstellt wird, die anschließend einer Bildauswertung unterzogen wird. Wenn im Rahmen der Bildauswertung ein festgelegtes Bewegungsmuster erkannt worden ist, wird die Klappe geöffnet oder andernfalls nicht geöffnet. Ein bestimmtes Bewegungsmuster wird dabei als Zustimmung interpretiert, ein anderes Bewegungsmuster wird dabei als Ablehnung interpretiert. Wenn kein zustimmendes Bewegungsmuster erkannt wird, erfolgt kein Öffnen der Klappe. Um das Bewegungsmuster zu erkennen, kann es vorgesehen sein, dass nicht nur eine einzige Bildaufnahme (Standbild) erstellt wird, stattdessen kann eine Bildsequenz als Film aufgenommen werden, die ebenfalls einer entsprechenden Auswertung unterzogen wird, vorzugsweise in Echtzeit, um ein festgelegtes Bewegungsmuster zu erfassen.

Daneben betrifft die Erfindung ein Kraftfahrzeug, mit einer Klappe, einem Mittel zum Identifizieren eines Benutzers und einer Kamera zum Erstellen einer Bildaufnahme des Benutzers gemäß Anspruch 7.

In den Unteransprüchen sind weitere Details der Erfindung beschrieben.

Weitere Vorteile und Einzelheiten der Erfindung werden nachfolgend anhand eines Ausführungsbeispiels unter Bezugnahme auf die Zeichnungen erläutert. Die Zeichnungen sind schematische Darstellungen und zeigen:
- Fig. 1: ein Ablaufdiagramm mit den wesentlichen Schritten des erfindungsgemäßen Verfahrens zum Steuern einer Klappe eines Fahrzeugs; und
- Fig. 2: ein erfindungsgemäßes Kraftfahrzeug.

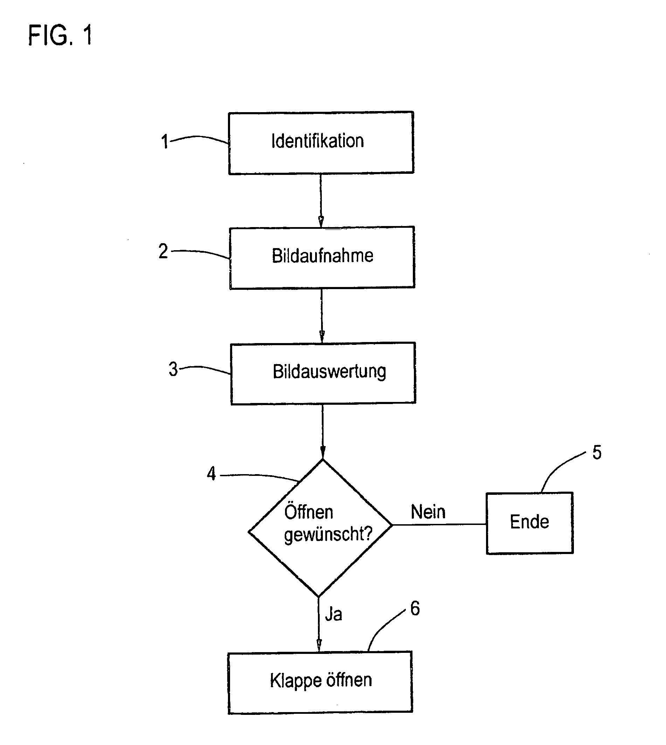

Fig. 1 zeigt ein Ablaufdiagramm der wesentlichen Schritte des Verfahrens zum Steuern einer Klappe eines Fahrzeugs.

Im ersten Schritt des Verfahrens wird eine Identifikation 1 eines Benutzers durchgeführt. Die Identifikation 1 erfolgt anhand eines vom Benutzer mitgeführten Identifikationsmerkmals. Dabei handelt es sich um einen Transponder, der eine bidirektionale Kommunikation mit einem entsprechend ausgebildeten fahrzeugseitigen Transponder durchführen kann. Die Identifikation 1 findet dann statt, wenn der Benutzer sich in dem Bereich hinter dem Fahrzeug befindet oder sich diesem Bereich nähert. In dieser Situation wird eine Rückfahrkamera des Fahrzeugs aktiviert und eine Bildaufnahme vorgenommen. Im einfachsten Fall wird lediglich eine einzige Bildaufnahme 2 erstellt, vorzugsweise wird jedoch eine Bildfolge als Film aufgenommen.

Die Bildaufnahme wird anschließend im nächsten Schritt einer Bildauswertung 3 unterzogen. Im Rahmen der Bildauswertung 3 werden bestimmte charakteristische Gegenstände anhand ihres Umrisses, der Form oder der Größe erkannt. Die Bildauswertung erfolgt in einer Steuerungseinrichtung, mittels einer Bildauswertungssoftware wird ermittelt, ob eine Bildaufnahme beispielsweise einen Einkaufswagen, Einkaufstaschen, Tragetaschen oder dergleichen zeigt. Die Bildauswertungssoftware ist lernfähig, so dass erkannte Gegenstände gespeichert werden, um diese Gegenstände nachfolgend schneller identifizieren zu können.

Sofern die Bildauswertung 3 ergeben hat, dass ein relevanter Gegenstand, beispielsweise ein Einkaufswagen, vom Benutzer mitgeführt wird und sich der Benutzer im rückwärtigen Bereich des Fahrzeugs befindet bzw. sich dem rückwärtigen Bereich nähert, wird im nächsten Schritt 4 geprüft, ob ein Öffnen der Klappe vom Benutzer gewünscht wird. Anschließend erfolgt im Schritt 5 das Öffnen der Klappe. Andernfalls, wenn im Rahmen der Bildauswertung 3 kein relevanter Gegenstand ermittelt werden konnte, wird daraus im Schritt 4 geschlossen, dass ein Öffnen der Klappe nicht gewünscht ist. Anschließend wird das Verfahren im Schritt 6 beendet. Das Verfahren wird erneut initiiert, wenn sich ein Benutzer mit dem mitgeführten Identifikationsmerkmal dem verschlossenen Fahrzeug nähert.

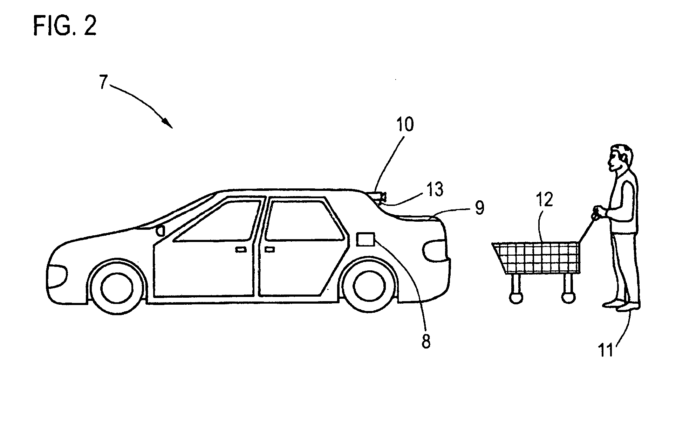

Fig. 2 zeigt ein Fahrzeug 7, mit einer Steuerungseinrichtung 8, die die Bildauswertung durchführt und gegebenenfalls eine Klappe 9 öffnet. Am Fahrzeugheck befindet sich eine Rückfahrkamera 10, die den rückwärtigen Bereich des Fahrzeugs 7 überwacht und eine Bildaufnahme eines Benutzers 11 erstellt, wenn dieser sich mit Gepäck oder - wie in Fig. 2 dargestellt ist - einem Einkaufswagen 12 dem rückwärtigen Bereich nähert.

Zusätzlich ist in der Nähe der Kamera 10 eine Leuchtdiode 13 vorgesehen, die dann leuchtet, wenn eine Identifikation 1 des Benutzers 11 erfolgreich war.

Der Benutzer 11 kann anschließend eine Bewegung durchführen, beispielsweise durch Kopfnicken, diese Bewegung wird ebenfalls von der Rückfahrkamera 10 erfasst. Nach der Bildaufnahme 2 erfolgt eine Bildauswertung 3, das Kopfnicken des Benutzers 11 wird dabei als Zustimmung interpretiert, anschließend wird die Klappe 9 geöffnet.

Alternativ kann der Benutzer 11 eine ablehnende Bewegung durchführen, beispielsweise durch Kopfschütteln. Analog wird im Rahmen der Bildauswertung 3 erkannt, dass ein Öffnen der Klappe 9 nicht gewünscht wird, so dass ein unerwünschtes Öffnen der Klappe 9 unterbleibt.

## Patentansprüche

1. Verfahren zum Steuern einer Klappe (9) eines Fahrzeugs, umfassend die folgenden Schritte:
- Identifizieren eines in der Nähe der Klappe anwesenden Benutzers (1);
- Erstellen wenigstens einer Bildaufnahme des Benutzers mittels einer Kamera (2),
- Auswerten der aufgenommenen Bildaufnahme dahingehend, ob eine Öffnung der Klappe erforderlich ist (3), und
- gegebenenfalls Öffnen der Klappe (6),
wobei bei der Auswertung der aufgenommenen Bildaufnahme ermittelt wird, ob der Benutzer Gepäck trägt und/oder einen Einkaufswagen (12) mit sich führt,
**dadurch gekennzeichnet,**
**dass** der Benutzer nach der Identifizierung eine zustimmende oder eine ablehnende Bewegung durchführt, die mittels einer Bildaufnahme erfasst wird und dass die Klappe bei einer zustimmenden Bewegung geöffnet und bei einer ablehnenden Bewegung nicht geöffnet wird.

2. Verfahren nach Anspruch 1,
**dadurch gekennzeichnet,**
**dass** das Identifizieren des Benutzers anhand eines mitgeführten Funkschlüssels erfolgt.

3. Verfahren nach Anspruch 1 oder 2,
**dadurch gekennzeichnet,**
**dass** die Bildaufnahme mittels einer Rückfahrkamera aufgenommen wird.

4. Verfahren nach einem der vorangehenden Ansprüche,
**dadurch gekennzeichnet,**
**dass** nach der Identifizierung eines Benutzers ein optisches Signal ausgegeben wird.

5. Verfahren nach Anspruch 4,
**dadurch gekennzeichnet,**
**dass** das optische Signal mittels einer LED ausgegeben wird.

6. Verfahren nach einem der vorangehenden Ansprüche,
**dadurch gekennzeichnet,**
**dass** die Bewegung als Bildsequenz oder als Film erfasst wird.

7. Kraftfahrzeug, mit einer Klappe (9), einem Mittel zum Identifizieren eines Benutzers, einer Kamera zum Erstellen einer Bildaufnahme des Benutzers und einer Steuerungseinrichtung (8), die zum Auswerten der Bildaufnahme im Hinblick darauf, ob ein Öffnen der Klappe (9) erforderlich ist, sowie zum Öffnen der Klappe (9) ausgebildet ist, wobei durch die Steuerungseinrichtung (8) ermittelbar ist, ob der Benutzer Gepäck trägt und/oder einen Einkaufswagen (12) mit sich führt,
**dadurch gekennzeichnet,**
**dass** nach der Identifizierung eine zustimmende oder eine ablehnende Bewegung des Benutzers erfassbar ist und die Klappe (9) bei einer zustimmenden Bewegung öffenbar und bei einer ablehnenden Bewegung nicht öffenbar ist.

8. Kraftfahrzeug nach Anspruch 7,
**dadurch gekennzeichnet,**
**dass** die Kamera (10) eine Rückfahrkamera ist.

## Claims

1. Method for controlling a boot lid or hatch (9) of a vehicle, comprising the following steps:
- identifying a user (1) present in the vicinity of the lid;
- capturing at least one image of the user by means of a camera (2);
- evaluating the captured image to determine whether it is necessary to open the lid (3), and
- optionally opening the lid (6),
the evaluation of the captured image comprising determining whether the user is carrying luggage and/or a shopping trolley (12),
**characterised in that**, after identification, the user performs a movement of consent or refusal which is detected by image capture, and **in that** the boot lid is opened in the event of a movement of consent and not opened in the event of a movement of refusal.

2. Method according to claim 1, **characterised in that** the user is identified by means of a remote key carried by the user.

3. Method according to claim 1 or 2, **characterised in that** the image is captured by means of a rear view camera.

4. Method according to one of the preceding claims, **characterised in that** after the identification of a user an optical signal is emitted.

5. Method according to claim 4, **characterised in that** the optical signal is emitted by means of an LED.

6. Method according to one of the preceding claims, **characterised in that** the movement is captured as an image sequence or as a film.

7. Motor vehicle having a boot lid or hatch (9), means for identifying a user, a camera for capturing an image of the user and a control device (8) which is configured to evaluate the image capture to determine whether the boot lid (9) has to be opened, and is configured to open the boot lid (9), the control device (8) being capable of determining whether the user is carrying luggage and/or a shopping trolley (12) with them,
**characterised in that**,
after the identification, a movement of consent or refusal by the user can be detected and, in the event of a movement of consent, the boot lid (9) can be opened and, in the event of a movement of refusal, the boot lid cannot be opened.

8. Motor vehicle according to claim 7, **characterised in that** the camera (10) is a rear view camera.

## Revendications

1. Procédé de commande d'un hayon (9) d'un véhicule automobile, comprenant les étapes suivantes :
- identification (1) d'un utilisateur présent à proximité du hayon,
- enregistrement (2) d'au moins une image de l'utilisateur au moyen d'une caméra,
- évaluation (3) de l'image enregistrée pour savoir si une ouverture du hayon est nécessaire et
- le cas échéant, ouverture (6) du hayon,
selon lequel, lors de l'évaluation de l'image enregistrée, on détermine si l'utilisateur porte des paquets et/ou pousse un chariot (12),
**caractérisé en ce que**, après l'identification, l'utilisateur effectue un mouvement d'acceptation ou de refus qui est détecté au moyen d'un enregistrement d'image et **en ce que**, dans le cas d'un mouvement d'acceptation, le hayon est ouvert et, dans le cas d'un mouvement de refus, le hayon n'est pas ouvert.

2. Procédé selon la revendication 1, **caractérisé en ce que** l'identification de l'utilisateur s'effectue à l'aide d'une clé de commande par radio portée par celui-ci.

3. Procédé selon la revendication 1 ou 2, **caractérisé en ce que** l'enregistrement d'image s'effectue au moyen d'une caméra de recul.

4. Procédé selon l'une des revendications précédentes, **caractérisé en ce que**, après l'identification d'un utilisateur, un signal optique est émis.

5. Procédé selon la revendication 4, **caractérisé en ce que** le signal optique est émis au moyen d'une LED.

6. Procédé selon l'une des revendications précédentes, **caractérisé en ce que** le mouvement est détecté sous forme de séquence d'images ou sous forme de film.

7. Véhicule automobile, avec un hayon (9), avec des moyens destinés à l'identification d'un utilisateur, avec une caméra destinée à l'enregistrement d'une image de l'utilisateur et avec un dispositif de commande (8) qui est conçu pour évaluer l'image afin de savoir si une ouverture du hayon (9) est nécessaire et pour ouvrir le hayon (9), le dispositif de commande (8) permettant de déterminer si l'utilisateur porte des paquets et/ou pousse un chariot (12),
**caractérisé en ce que**, après l'identification, un mouvement d'acceptation ou de refus de l'utilisateur peut être détecté et **en ce que** le hayon (9) peut être ouvert dans le cas d'un mouvement d'acceptation et ne pas être ouvert dans le cas d'un mouvement de refus.

8. Véhicule automobile selon la revendication 7, **caractérisé en ce que** la caméra (10) est une caméra de recul.
